# EUROPEAN PATENT APPLICATION

(11) **EP 3 392 475 A1**
(43) Date of publication of application: **24.10.2018**
(21) Application number: 17167109.2
(22) Date of filing: 19.04.2017
(51) Int. Cl.: F01D 25/28, F02C 7/20

(54) **FLEXIBLE TURBINE SUPPORT**

(71) Applicant: Siemens Aktiengesellschaft, 80333 München (DE)
(72) Inventor: KORISTA, Milan, 61800 Brno (CZ)

(57) **Abstract**

The present invention relates to a turbine support device (100) for supporting a turbine (220). The turbine support device (100) comprises a base support element (101) configured to be fixed to a ground and a support bar (110) coupled to the base support element (101), wherein the support bar (110) comprises a coupling region (113) for coupling a turbine casing (221, 222) of the turbine (220) to the support bar (110). The coupling region (113) is spaced apart from the base support element (101), wherein the support bar (110) comprises a cross section profile which comprises a first length along a first principal direction (111) and a second length along a second principal direction (112) which is orthogonal to the first principal direction (111). The first length is longer than the second length such that the support bar (110) is stiffer against a force acting in the first principal direction (111) than against a force acting in the second principal direction (112).

## Description

### Field of the invention

The present invention relates to a turbine support device for supporting a turbine and a respective turbine. Furthermore, the present invention relates to a method for supporting a turbine.

### Art background

Turbine casing or casings mass has to be somehow supported. The most typical way of this support is the rigid fixed support of the turbine casing on one side (typically it is the exhaust side). On the other side of the turbine casing (usually the inlet side) the part of the casing support attached to the casing is sliding on the second part of the support which is attached to the turbine fundament. The reason for the movement (sliding) is the thermal expansion of the turbine casing. In order to provide a sliding support of the turbine, a relatively large size of the support parts is necessary.

### Summary of the invention

It may be an object of the present invention to provide a robust support for a turbine, which support requires less installation space.

In order to achieve the object defined above, a turbine support device for supporting a turbine, a turbine and a method for supporting a turbine according to the independent claims is presented.

According to a first aspect of the present invention, a turbine support device for supporting a turbine is presented. The turbine support device comprises a base support element configured to be fixed to a ground and a support bar coupled to the base support element. The support bar comprises a coupling region for coupling a turbine of the turbine to the support bar, wherein the coupling region is spaced apart from the base support element. The support bar comprises a cross section profile which comprises a first length along a first principal direction (e.g. a first spatial direction) and a second length along a second principal direction (e.g. a second spatial direction) which is orthogonal to the first principal direction (e.g. first spatial direction). The first length is longer than the second length such that the support bar is stiffer against a force acting in the first spatial direction (e.g. first spatial direction) than against a force acting in the second principal direction (e.g. second spatial direction).

According to a further aspect of the present invention, a turbine is presented which comprises a turbine and a turbine support device described above, wherein the coupling region of the support bar is coupled to the turbine casing of the turbine.

According to a further aspect of the present invention, a method for supporting a turbine is presented. The method comprises fixing a base support element of a turbine support device to a ground, coupling a support bar of the turbine support device to the base support element, and coupling a coupling region of the support bar to a turbine casing of the turbine. The coupling region is spaced apart from the base support element. The support bar comprises a cross section profile which comprises a first length along a first principal direction and a second length along a second principal direction which is orthogonal to the first principal direction, wherein the first length is longer than the second length such that the support bar is stiffer against a force acting in the first principal direction than against a force acting in the second principal direction.

The turbine support device is adapted for supporting a turbine, such as a gas turbine or steam turbine. Specifically, for supporting the turbine, a plurality of above described support devices may be used. The turbine support device may be made of a metal material or of a composite material, such as carbon fibres or glass fibres.

The base support element may have a plate-like design. The base support element is adapted to be arranged onto a ground or a further ground supporting section. The base support elements may have a plurality of fixing provisions, such as bolt or through holes such that a fixation to the ground is possible and a sliding movement of the base support element is prevented.

The support bar may have a first end section which is coupled to the base support element. For example, the support bar may be formed monolithically and integral with the base support element. Alternatively, the support bar may be welded or screwed to the base support element. Along a further section, for example at a free end of the support bar which is opposed to the first end by which the support bar is fixed to the base support element, the coupling region of the support bar is formed. The coupling region defines the region, by which a fixation with the turbine is provided. The coupling region may comprise further fixation provisions, such as receiving holes for respective screws or bolts which are adapted to be fixed to the turbine.

Furthermore, the support bar is designed by a special cross section profile which comprises a first length along a first principal direction and the second length along a second principal direction, wherein the first length is longer than the second length. According to exemplary embodiments, the first length may be 5 times longer, in particular 10 times longer, and further in particular 20 times longer, than the second length.

The first length defines a length between two opposing edge points of the profile of the support bar along a direction, i.e. along the first principal/spatial direction. The second length defines a length between two further opposing edge points of the profile along a further direction, i.e. along the second principal/spatial direction.

A first and second principal directions are defined within a common profile cross section (i.e. plane) of the support bar, wherein the first principal direction is perpendicular to the second principal direction. The first and second principal directions may be the central principal axes of inertia and form the second moment of area. A third principal direction is perpendicular with respect to the first and the second principal directions. The first and second principal directions run through the centre of area of the profile cross section of the respective support bar. Hence, if a first length of the profile along the first principal direction is longer than the second length of the profile along the second principal direction, the support bar is stiffer against a force acting in the first principal direction than against the force acting in the second principal direction.

In an exemplary embodiment, if the support bar has a rectangular profile, the first principal direction extends along a first spatial direction of a first edge of the profile and the second principal direction extends along a second spatial direction of a second edge of the profile, wherein the first edge and the second edge are perpendicular with respect to each other. In particular, the base support element comprises a fixing surface, to which the support bar is attached. The fixing surface extends along the above-mentioned plane (cross sectional plane of the support bar) in which the first and the second spatial direction are defined.

By providing the support bar with the cross-sectional profile having the longer first length along the first principal direction and a shorter second length along the second principal direction, the stiffness against a force acting along the first principal direction and the second principal direction can be adjusted. For example, the support bar is stiffer against the force acting in the first principal direction than against the force acting in the second principal direction, because the second length is shorter than the first length. In other words, the support bar has a higher flexibility if being bent along the second principal direction and a lower flexibility if being bent along the first principal direction. Specifically, the support bar may be bent and deformed in the second principal direction in an elastic manner.

Hence, by the turbine support device having a support bar as described above, a flexible support bar of a turbine can be achieved without any moving or sliding parts. For example, if the turbine support device supports the turbine and it is desired that no degree of freedom along the first direction (for example along the axial direction of the turbine) and a certain degree of freedom along the second direction (for example along the radial direction of the turbine) the turbine support device can be adjusted with respect to the turbine such that the first length of the support bar extends along the axial direction of the turbine and the second length of the support bar extends along the radial direction of the turbine. Hence, without any movable parts, a desired flexibility of the support is achieved by the inventive support device.

According to a further exemplary embodiment, the support bar comprises an H-profile or a T-profile. According to a further exemplary embodiment, the support bar may be formed by two spaced apart plate elements, which extends parallel with respect to each other between the base support element and the coupling region. In this exemplary embodiment, the second length is defined by the distance between the two plate elements plus the thickness of each plate element.

According to a further exemplary embodiment of the present invention, the turbine support device further comprises a further support bar coupled to the base support element spaced apart from the support bar. The further support bar comprises a further coupling region for coupling the turbine to the further support bar, wherein the further coupling region is spaced apart from the base support element. The further support bar comprises a further cross section profile which comprises a third length along a third principal direction (i.e. spatial direction) and a fourth length along a fourth principal direction (i.e. spatial direction) which is orthogonal to the third principal direction. The third length is longer than the fourth length such that the further support bar is stiffer against a force acting in the third principal direction than against a force acting in the fourth principal direction.

The further support bar may be designed in the same manner and may comprise the same features as the above described support bar. The support bar and the further support bar are spaced apart from each other such that the respective coupling sections may be coupled to different locations of the turbine.

Accordingly, a plurality of further support bars may be attached to the common base support element, wherein the further support was designed as the above described support.

According to a further exemplary embodiment, the first principal direction is parallel to the third principal direction. Hence, both base support elements are stiffer against the force acting along the first and the third direction than against a further force acting along the second and the fourth direction.

According to a further exemplary embodiment, the first principal direction is non-parallel to the third principal direction. Hence, each base support element has a different stiffness against the force acting along the first or the third principal direction.

According to a further exemplary embodiment, the support bar is arranged such that the first principal direction has a first angle to a reference direction, in particular to a radial direction of the turbine to be supported, between 5° and 45°, in particular between 10° and 30°.

According to a further exemplary embodiment, the further support bar is arranged such that the third principal direction has a second angle to the reference direction, in particular to the radial direction of the turbine to be supported, between -5° and -45°, in particular between -10° and -30°.

For example, the first length (i.e. the first principal direction) of the support bar may have a first angle with respect to a reference direction (for example the radial or the axial direction of the turbine) between 5° and 45 °, in particular between 10° and 30°. In an exemplary embodiment, the further support bar may have a second angle with respect to the reference direction (for example the radial or the axial direction of the turbine) between -5° (i.e. 355°) and -45° (i.e. 315°), in particular between -10° (i.e. 350°) and -30° (i.e. 330°).

According to a further exemplary embodiment, the first angle and the second angle have the same absolute value. The support bars may provide for example a force due to the elastic deformation to the centre axis of the turbine, i.e. to the rotating shaft of the turbine such that a centring effect is achieved. If the support bar and the further support bar have angles with the same absolute value, a more homogeneous centring effect may be achieved.

Hence, by arranging the support bars with its first lengths along a desired orientation, the degrees of freedom of the turbine support can be adjusted so that a flexible turbine support without any slidable parts is possible.

According to a further exemplary embodiment, the turbine support device further comprises a centring bar coupled to the base support element, wherein the centring bar is configured for being engaged by an engagement section of the turbine.

The centring bar may function as a key which is adapted for being engaged by a specific engagement section, such as a respective receiving hole in the turbine casing. Hence, a fast and exact installation proceeding of the turbine is achieved because by engaging the centring bar in the engagement section of the turbine, the turbine support device is centred and arranged in the desired orientation. For example, the centring bar may comprise a specific profile which fits in a respectively formed engagement hole in the turbine casing of the turbine.

According to a further exemplary embodiment of the turbine, the turbine comprises an axial direction being parallel with a rotary axis of a turbine shaft of the turbine. The support bar is arranged such that the first principal direction is parallel to the axial direction. Hence, if the first principal direction is parallel to the axial direction, the support bar is flexible against a radial force acting along the second principal direction. For example, the turbine and the turbine casing, respectively, varies its diameter and width, respectively, caused by thermal expansion during operation of the turbine. Hence, the change in the diameter of the casing can be damped due to the flexibility of the support bar along the second principal direction. No stress due to the thermal expansion would be caused in the turbine casing or in the support bar at least along the radial direction.

According to a further exemplary embodiment, the support bar is arranged such that the first principal direction is parallel to a radial direction of the turbine. Hence, if the first principal direction is parallel to the radial direction, the support bar is flexible against an axial force acting along the second principal direction. For example, the turbine and the turbine casing, respectively, varies its axial thermal expansion during operation of the turbine. Hence, the change in the axial extension of the casing can be damped due to the flexibility of the support bar along the second principal direction. No stress due to the thermal expansion would be caused in the turbine casing or in the support bar at least along the axial direction.

According to an exemplary embodiment of the turbine, for example a first above described turbine support device and a second above described turbine support device are arranged for supporting the turbine. For example, the first turbine support device is formed and arranged with respect to the turbine in such a way, that the first principal direction is parallel with the radial direction and the second turbine support device is formed and arranged with respect to the turbine in such a way that the further first principal direction of the second turbine support device is parallel with the axial direction of the turbine. Hence, a proper support further turbine is achieved without causing stress and without needing movable or slidable supporting parts.

According to a further exemplary embodiment, the support bar (and any further support bar mounted to the base support element) is arranged such that the first principal direction has an angle to a radial direction between 5° and 45°, in particular between 10° and 30°.

According to a further exemplary embodiment, the turbine further comprises an adjustment rod and a further turbine support device as described above. The coupling region of the support bar is coupled to the turbine casing of the turbine, wherein the coupling region and the further coupling region are spaced apart from each other in particular along the radial direction or axial direction. In other words, the coupling region and the further coupling region may be spaced apart from each other along the second principal direction. The adjustment rod is arrangement between the coupling region and the further coupling region in order to adjust a distance between the coupling region and the further coupling region in an unloaded status of the turbine. The adjustment rod is in particular stiffer along the second principal direction with respect to the stiffness of the support bar along the second principal direction. Hence, by the adjustment rod, a maximal elastic deformation of the support bar along the second principal direction may be adjusted. For example, the adjustment rod may be attached to a root section of the support bar, which root section is the end of the support bar coupled to the base support element. In further exemplary embodiment, the adjustment rod may also be attached to the base support element of the turbine support device and the further turbine support element of the further turbine support device.

According to a further exemplary embodiment, a length of the adjustment rod is adjustable. Hence, the distance between the turbine support devices and for example the maximal elastic deformation of the support bars along the second principal direction may be adjustable.

Summarising, by the approach of the present invention, slidable parts for the support of the turbine casing may be avoided even if the turbine casing is subjected to the thermal expansion. The support elements according to the present invention are very flexible when loaded in the second direction.

The turbine casing is supported by (vertical) support bars which are arranged to allow e.g. the axial displacement at the inlet part of the turbine casing and a radial displacement at the exhaust turbine casing, which is spaced apart along the axial direction from the turbine inlet part of the casing. That means the front turbine support device(s) does not allow radial displacement and the rear turbine support device(s) does not allow the axial displacement. In another words, the rear turbine support device play the role of the fixed point for axial displacement. There is added radial fix point element next to the rear turbine support to ensure the rear support plays the role of the turbine casing fix point in all horizontal directions. That radial fix point element may in form of the key (e.g. the centering bar). The vertical fix point role is provided by support bars of the flexible support devices itself since the turbine is attached rigidly to the support devices and the support is attached rigidly to the ground and fundament, respectively.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Fig. 1: shows a schematic view of a turbine support device having one base support element according to an exemplary embodiment of the present invention,
- Fig. 2: shows a schematic front view of a part of a turbine which is supported by turbine support devices as shown in Fig. 1,
- Fig. 3: shows a schematic side view of a part of the turbine as shown in Fig. 2,
- Fig. 4: shows a schematic view of a turbine support device having a plurality of support bars according to an exemplary embodiment of the present invention,
- Fig. 5: shows a schematic front view of a part of a turbine which is supported by turbine support device as shown in Fig. 4,
- Fig. 6: shows a schematic side view of a part of the turbine as shown in Fig. 5.
- Fig. 7: shows a schematic view of an arrangement of three turbine support devices according to an exemplary embodiment of the present invention.

### Detailed Description

The illustrations in the drawings are schematically. It is noted that in different figures, similar or identical elements are provided with the same reference signs.

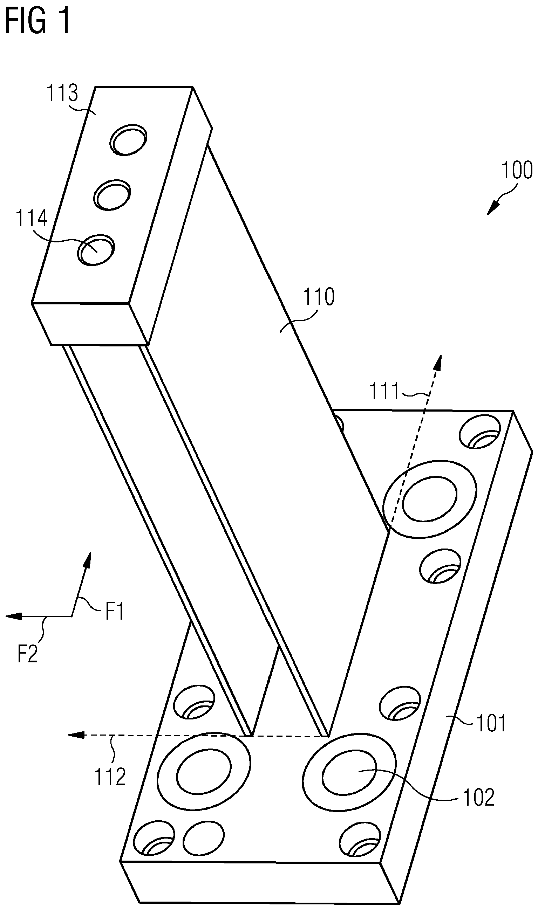

Fig. 1 shows a turbine support device 100 for supporting a turbine 220. The turbine support device 100 comprises a base support element 101 configured to be fixed to a ground and a support bar 110 coupled to the base support element 101, wherein the support bar 110 comprises a coupling region 113 for coupling a turbine casing 221, 222 of the turbine 220 to the support bar 110. The coupling region 113 is spaced apart from the base support element 101, wherein the support bar 110 comprises a cross section profile which comprises a first length along a first principle direction/spatial direction 111 and a second length along a second principle direction/spatial direction 112 which is orthogonal to the first spatial direction 111. The first length is longer than the second length such that the support bar 110 is stiffer against a force acting in the first spatial direction 111 than against a force acting in the second spatial direction 112.

In order to provide a better overview, the principle directions 111, 112, 211, 212 411, 412 are drawn in the Figures along the edges of the profiles. However, the principle direction are supposed to run through the centre of area of the respective support bar 110, 210, 410.

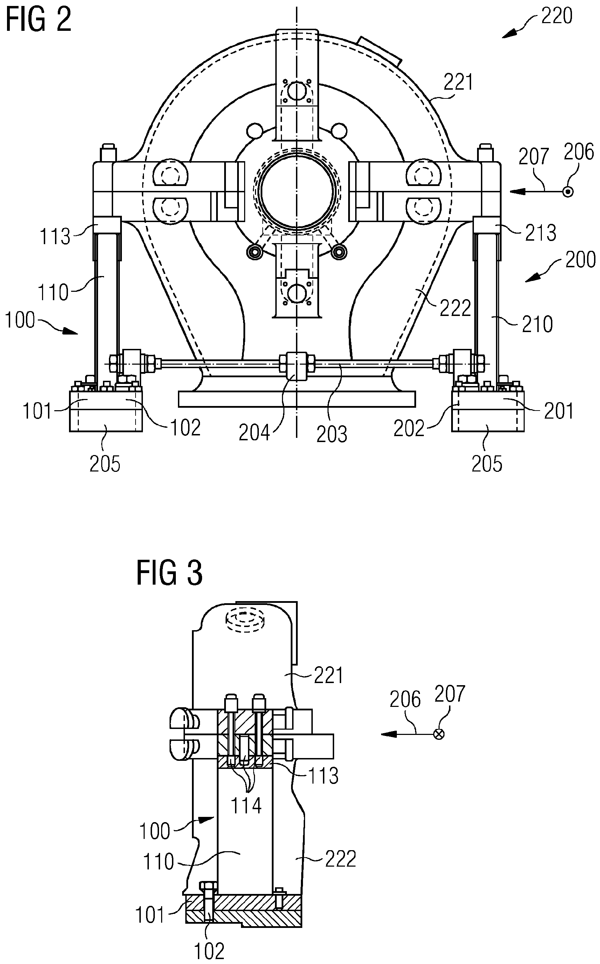

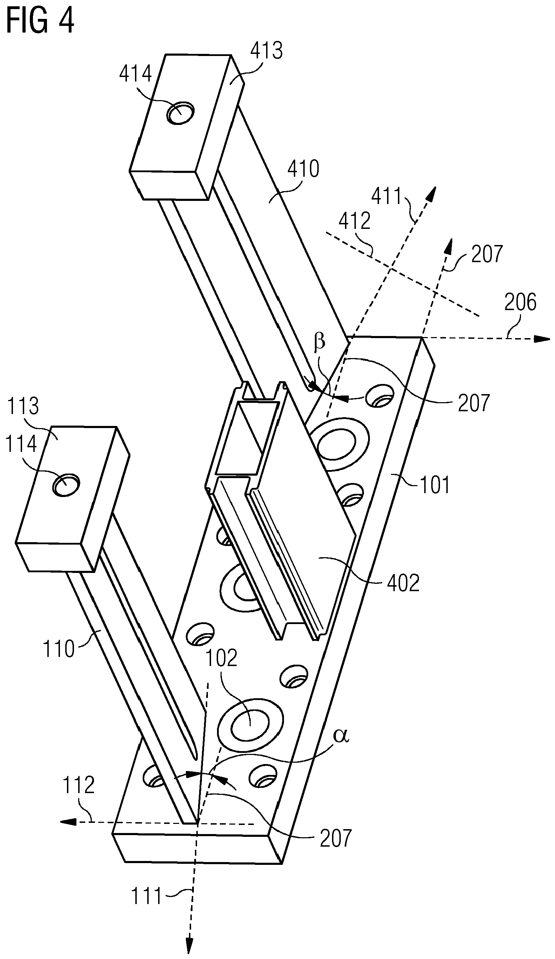

The turbine support device 100 is adapted for supporting a turbine 220 (see Fig. 2). Specifically, for supporting the turbine 220, a plurality of above described support devices 100 shown in Fig. 1 or Fig. 4 may be used.

The base support element 101 may have a plate-like design. The base support element 101 is adapted to be arranged onto a ground or a further ground supporting section 205 (see Fig. 2). The base support elements 101 may have a plurality of fixing provisions 102, such as through holes, such that a fixation to the ground 205 is possible and a sliding movement of the base support element 100 is prevented.

The support bar 110 may have a first end section which is coupled to the base support element 101. Along a further section, for example at a free end of the support bar 110 which is opposed to the first end by which the support bar 110 is fixed to the base support element 101, the coupling region 113 of the support bar 110 is formed. The coupling region 113 defines the region, by which a fixation with the turbine 220 is provided. The coupling region 113 may comprise further fixation provisions 113, such as receiving holes for respective screws or bolts which are adapted to be fixed to the turbine 220.

Furthermore, the support bar 110 is designed by a special cross section profile which comprises a first length along a first spatial direction 111 and the second length along a second spatial direction 112, wherein the first length is longer than the second length.

By providing the support bar 110 with the cross-sectional profile having the longer first length along the first spatial direction 111 and a shorter second length along the second spatial direction 112, the stiffness against a force F1, F2 acting along the first spatial direction 111 and the second spatial direction 112 can be adjusted. For example, the support bar 110 is stiffer against the force F1 acting in the first spatial direction 111 than against the force F2 acting in the second spatial direction 112, because the second length is shorter than the first length. In other words, the support bar 110 has a higher flexibility if being bent along the second spatial direction 112 and a lower flexibility if being bent along the first spatial direction 111. Specifically, the support bar may be bent and deformed in the second spatial direction 112 in an elastic manner.

As shown in Fig. 1, the support bar 110 may be formed by two spaced apart plate elements, which extends parallel with respect to each other between the base support element 101 and the coupling region 113. In this exemplary embodiment, the second length is defined by the distance between the two plate elements plus the thickness of each plate element.

**Fig. 2** shows a schematic front view of a turbine 220 which is supported by turbine support devices 100 as shown in Fig. 1. **Fig. 3** shows a schematic side view of the turbine 220 as shown in Fig. 2.

By the turbine support devices 100 having the respective support bars 110 as described above, a flexible support for the turbine 220 can be achieved without any moving or sliding parts. For example, if the turbine support device 100 supports the turbine 220 and it is desired that no degree of freedom along the first direction (for example along the axial direction 206 of the turbine 220) and a certain degree of freedom along the second direction (for example along the radial direction 207 of the turbine) the turbine support device 100 can be formed and adjusted with respect to the turbine 220 such that the first spatial direction 111 of the support bars hundred 10 extend along the axial direction 206 of the turbine 220 and the second spatial direction 112 of the support bar 110 extends along the radial direction 207 of the turbine 220. Hence, without any movable parts, a desired flexibility of the support is achieved by the inventive support device.

The axial direction 206 of the turbine 220 is parallel with a rotary axis of a turbine shaft of the turbine 220. In the exemplary embodiment shown in Fig. 2, the support bar 110 is arranged such that the first spatial direction 111 is parallel to the axial direction 206. Hence, if the first spatial direction 111 is parallel to the axial direction 206, the support bar 110 is flexible against a radial force acting along the second spatial direction 112 (i.e. the radial direction 207). For example, the turbine 220 and the turbine casings 221, 222, respectively, varies its diameter and width, respectively, caused by thermal expansion during operation of the turbine 220. Hence, the change in the diameter of the casing 221, 222 can be damped due to the flexibility of the support bar 110 along the second spatial direction 112.

In the exemplary embodiment shown in Fig. 2, a first above described turbine support device 100 and a second above described turbine support device 200 are arranged spaced apart from each other along the radial direction 207 for supporting the turbine 220. The support bar 110 is arranged, such that the first spatial direction 111 is parallel with the axial direction 206 and the second spatial direction 112 is parallel with the radial direction 207 of the turbine 220.

The further turbine support device 200 comprises a further base element 201 which is arranged by further fixing elements 22 onto a ground support 205. The further support bar 210 is arranged, such that the further first spatial direction is parallel with the axial direction 206 and the further second spatial direction is parallel with the radial direction 207 of the turbine 220. Hence, the turbine support devices 100, 200 flexibly supports the turbine 220 during a radial extension of the turbine casings 221, 222.

Specifically, as shown in Fig. 2, the turbine tuna 20 comprises an upper turbine casing 221 and a lower turbine casing 222. The casings 221, 222 are coupled together by its respective flanges. The respective turbine support devices 100, 200 are fixed to the respective flanges of the casings 221, 222.

The turbine 220 further comprises an adjustment rod 203. The coupling region 113 of the support bar is coupled to the turbine casing of the turbine, wherein the coupling region 113 and the further coupling region 213 are spaced apart from each other in particular along the radial direction 207. In other words, the coupling region 113 and the further coupling region 213 may be spaced apart from each other along the second spatial direction i.e. the radial direction 207. The adjustment rod 203 adjusts a distance between the coupling region 113 and the further coupling region 213 in an unloaded status of the turbine 220. The adjustment rod 103 is in particular stiffer along the second spatial direction 112 (e.g. the radial direction 207) with respect to the stiffness of the support bars 100, 200 along the second spatial direction 112. Hence, by the adjustment rod 203, a maximal elastic deformation of the support bars 110, 210 along the second spatial direction 112 (e.g. the radial direction 207) may be adjusted. For example, the adjustment rod 203 may be attached to a root section of the support bars 110, 210, which root sections are the end of the support bars 110, 210 coupled to the base support elements 101, 201.

The length of the adjustment rod 203 is adjustable, e.g. by an adjustment device 204. Hence, the distance between the turbine support devices 100, 200 and for example the maximal elastic deformation of the support bars 110, 220 along the second spatial direction 112 may be adjustable.

**Fig. 4** shows a schematic view of a turbine support device 100 having a plurality of support bars 110, 410 according to an exemplary embodiment of the present invention.

A support bar 110 and a further support bar 410 are coupled to the base support element 101. The further support bar 410 comprises a further coupling region 413 with a further fixing provision 414 for coupling the turbine 220 to the further support bar 410, wherein the further coupling region 413 is spaced apart from the base support element 101. The further support bar 410 comprises a further cross section profile which comprises a third length along a third principle direction/spatial direction 411 and a fourth length along a fourth principle direction/spatial direction 412 which is orthogonal to the third spatial direction 411. The third length is longer than the fourth length such that the further support bar 410 is stiffer against a force acting in the third spatial 411 direction than against a force acting in the fourth spatial direction 412.

The further support bar 410 may be designed in the same manner and may comprise the same features as the above described support bar 110. The support bar 110 and the further support bar 410 are spaced apart from each other such that the respective coupling sections 113, 413 may be coupled to different locations of the turbine 220.

In the present embodiment, the first spatial direction 111 is non-parallel to the third spatial direction 411. Hence, each base support element has a different stiffness against the force acting along the first or the third spatial direction 111, 411.

For example, the first length (i.e. the first spatial direction 111) of the support bar 110 may have an angle α with respect to a reference direction (for example the radial direction 207 of the turbine 220) between 10° and 30°. The further support bar 410 may have a further angle β with respect to the radial direction 207 between -10° (i.e. 350°) and -30° (i.e. 330°).

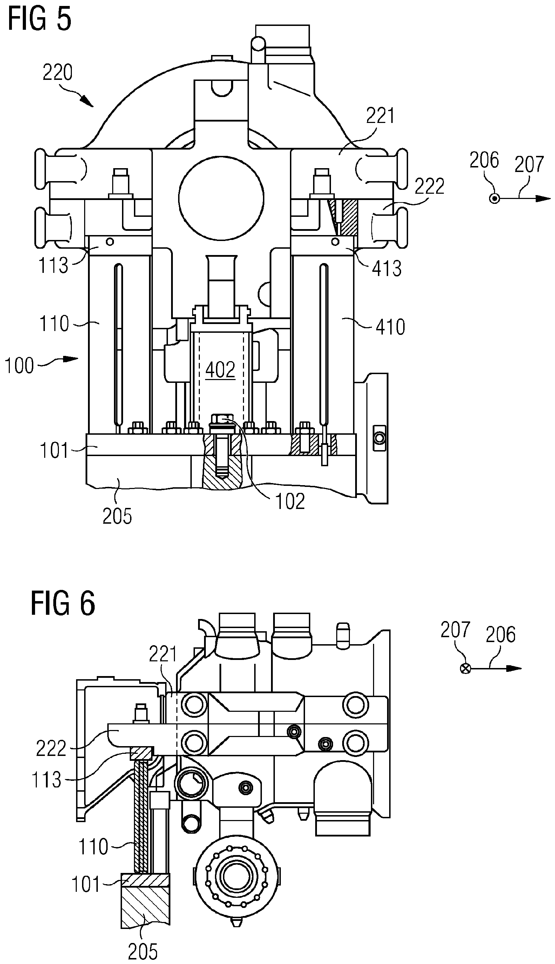

Hence, by arranging the support bars 110, 410 with its first lengths along a desired orientation, the degrees of freedom of the turbine support device 100 can be adjusted so that a flexible turbine support without any slidable parts is possible. Furthermore, in particular by the arrangement of the support bars 110, 410 is shown in Fig. 4, a centring effect is achieved. The support bars 110, 410 may provide a force due to the elastic deformation along the respective second and fourth spatial directions 112, 412 to the centre of the turbine 220, i.e. to the rotating shaft of the turbine 220 (see Fig. 5), such that a centring effect is achieved.

Furthermore, the turbine support device 100 further comprises a centring bar 401 coupled to the base support element 101, wherein the centring bar 401 is configured for being engaged by an engagement section of the turbine 220.

The centring bar 401 may function as a key which is adapted for being engaged by a specific engagement section, such as a respective receiving hole in the turbine casing 221 (see Fig. 5). Hence, a simple installation proceeding of the turbine 220 is achieved because by engaging the centring bar 401 in the engagement section of the turbine 220, the turbine support device 100 is centred and arranged in the desired orientation.

Fig. 5 shows a schematic front view of a turbine 220 which is supported by turbine support device 110 as shown in Fig. 4. **Fig. 6** shows a schematic side view of the turbine 220 as shown in Fig. 5.

The turbine support device 100 is arranged at a front end of a turbine 220. In particular, the support bar 110 is fixed to first flanges of the respective turbine casings 221, 222 and the further support bar 410 is coupled to a further flange of the respective turbine casings 221, 222. The centering bar 402 is coupled to respective engagement section of the turbine 202.

By the arrangement of the support bars 110, 410 as shown in Fig. 4, the position and alignment of the front support bars 110, 410 allow a certain thermal expansion of the casing and at the same time it provides self-centering effect of the front support bars 110, 410 when they are bent.

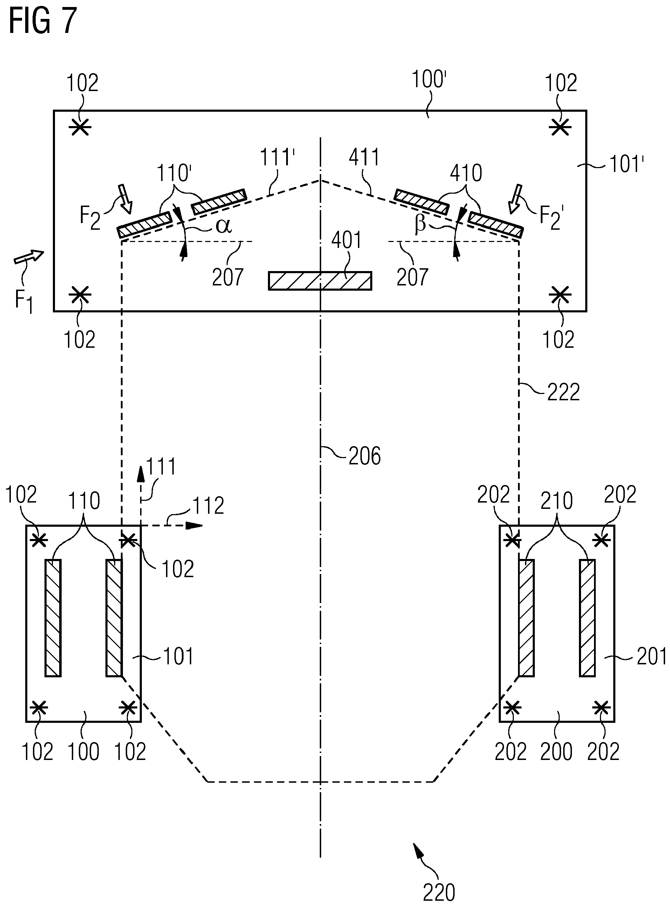

**Fig. 7** shows a schematic view of an arrangement of three turbine support devices 100, 100', 400 according to an exemplary embodiment of the present invention.

The turbine support devices 100, 200 are designed as shown in Fig. 1. The support bars 110, 210 comprise respective cross section profiles which comprises respective first lengths along a first principle direction/spatial direction 111 and a respective second lengths along a second principle direction/spatial direction 112 which is orthogonal to the first spatial direction 111. The respective first lengths are longer than the second lengths such that the support bar 110, 210 is stiffer against a force acting in the first spatial direction 111 than against a force acting in the second spatial direction 112.

Specifically, the turbine casing, and in particular the lower turbine casing 222 is shown. The turbine support devices 100, 200 are fixed to side faces of the lower turbine casing 222. The turbine support devices 100, 200 are arranged on opposite side faces of the lower turbine casing 222 with respect to a centre axis 206 of the turbine 220.

More specifically, the first spatial direction 111 is parallel to the axial direction 206 and perpendicular to a radial direction 207 of the turbine 220. Hence, the support bars 110, 210 are flexible and in particular elastically deformable if the turbine casing extends in the radial direction 207. At the same time, the turbine support devices 100, 200 are stiff against an axial movement or axial extension of the turbine casing along the axial direction 206.

Additionally, a third turbine support device 100' is arranged which supports for example an axial end of the lower turbine casing 222. The third turbine support device 100' is designed according to the exemplary embodiment shown in Fig. 4.

A support bar 110' and a further support bar 410 are coupled to the base support element 101'. In the present embodiment, the first spatial direction 111' is non-parallel to the third spatial direction 411. Hence, each base support element has a different stiffness against the force acting along the first or the third spatial direction 111', 411.

For example, the first length (i.e. the first spatial direction 111') of the support bar 110' may have first angle α with respect to a reference direction which is in the present example the radial direction 207 between 10° and 30°. The further support bar 410 may have a second angle β with respect to the radial direction 207 between -10° (i.e. 350°) and -30° (i.e. 330°).

Specifically, the first angle α and the second angle β have the same absolute value, for example α, β = ±30°. The support bars may provide for example a force due to the elastic deformation to the centre axis of the turbine, i.e. to the rotating shaft of the turbine such that a centring effect is achieved. If the support bar and the further support bar have angles with the same absolute value, a more homogeneous centring effect may be achieved.

Hence, the support bars 110, 410 shown in Fig. 4, may be flexible against a force F2 acting in a direction perpendicular to the first spatial direction 111' and a further force F2' acting in the third spatial direction 411. The respective forces F2, F2' may be generated due to a thermal expansion of the turbine cases, in particular the lower turbine casing 222. Hence, by the arrangement of the further turbine support device 100', a centring effect is achieved. The support bars 110, 410 may provide the forces F2, F2' due to the elastic deformation with respect to the centre of the turbine 220, i.e. to the axial direction 206 of the turbine 220 such that a centring effect is achieved.

Furthermore, the turbine support device 100' further comprises a centring bar 401 coupled to the base support element 101', wherein the centring bar 401 is configured for being engaged by an engagement section of the turbine 220. The centring bar 401 may function as a key which is adapted for being engaged by a specific engagement section, such as a respective receiving hole in the lower turbine casing 222.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Turbine support device (100) for supporting a turbine (220), the turbine support device (100) comprising
a base support element (101) configured to be fixed to a ground,
a support bar (110) coupled to the base support element (101),
wherein the support bar (110) comprises a coupling region (113) for coupling a turbine casing (221, 222) of the turbine (220) to the support bar (110),
wherein the coupling region (113) is spaced apart from the base support element (101),
wherein the support bar (110) comprises a cross section profile which comprises a first length along a first principal direction (111) and a second length along a second principal direction (112) which is orthogonal to the first principal direction (111),
wherein the first length is longer than the second length such that the support bar (110) is stiffer against a force acting in the first principal direction (111) than against a force acting in the second principal direction (112).

2. Turbine support device (100) according to claim 1,
wherein the support bar (110) comprises an H-profil or a T-profile.

3. Turbine support device (100) according to claim 1 or 2, further comprising
a further support bar (410) coupled to the base support element (101) spaced apart from the support bar (110), wherein the further support bar (410) comprises a further coupling region (413) for coupling the turbine (220) to the further support bar (410),
wherein the further coupling region (413) is spaced apart from the base support element (101),
wherein the further support bar (410) comprises a further cross section profile which comprises a third length along a third principal direction (411) and a fourth length along a fourth principal direction which is orthogonal to the third principal direction (411),
wherein the third length is longer than the fourth length such that the further support bar (410) is stiffer against a force acting in the third principal direction (411) than against a force acting in the fourth principal direction.

4. Turbine support device (100) according to claim 3,
wherein the first principal direction (111) is parallel to the third principal direction (411).

5. Turbine support device (100) according to claim 3,
wherein the first principal direction (111) is non-parallel to the third principal direction (411).

6. Turbine support device (100) according to one of the claims 1 to 5,
wherein the support bar (110) is arranged such that the first principal direction (111) has a first angle (α) to a reference direction, in particular to a radial direction (207) of the turbine (220) to be supported, between 5° and 45 °, in particular between 10° and 30°.

7. Turbine support device (100) according to claims 3 and 6,
wherein the further support bar (410) is arranged such that the third principal direction (411) has a second angle (β) to the reference direction, in particular to the radial direction (207) of the turbine (220) to be supported, between -5° and -45 °, in particular between -10° and -30°.

8. Turbine support device (100) according to claim 7,
wherein the first angle (α) and the second angle (β) have the same absolute value.

9. Turbine support device (100) according to one of the claims 1 to 8, further comprising
a centring bar (401) coupled to the base support element (101),
wherein the centring bar (401) is configured for being engaged by a engagement section of the turbine (220).

10. Turbine (220), comprising
a turbine casing (221, 222), and
a turbine support device (100) according to one of the claims 1 to 9,
wherein the coupling region (113) of the support bar (110) is coupled to the turbine casing (221, 222) of the turbine (220).

11. Turbine (220) according to claim 10,
wherein the turbine (220) comprises an axial direction (206) being parallel with a rotary axis of a turbine shaft of the turbine (220),
wherein the support bar (110) is arranged such that the first principal direction (111) is parallel to the axial direction (206).

12. Turbine (220) according to claim 10,
wherein the support bar (110) is arranged such that the first principal direction (111) is parallel to a radial direction (207) of the turbine (220).

13. Turbine (220) according to claim 10,
wherein the support bar (110) is arranged such that the first principal direction (111) has an angle (α, β) to a radial direction (207) between 5° and 45 °, in particular between 10° and 30°.

14. Turbine (220) according to one of the claims 10 to 13, further comprising
an adjustment rod (203),
a further turbine support device (200) according to one of the claims 1 to 6,
wherein the coupling region (113) of the support bar (110) is coupled to the turbine casing (221, 222) of the turbine (220),
wherein the further coupling region (213) of the further support bar (210) is coupled to the turbine casing (221, 222) of the turbine (220),
wherein the coupling region (113) and the further coupling region (213) are spaced apart from each other in particular along the radial direction (207),
wherein the adjustment rod (203) is arrangement between the coupling region (113) and the further coupling region (213) in order to adjust a distance between the coupling region (113) and the further coupling region (213) in an unloaded status of the turbine (220).

15. Method for supporting a turbine (220), the method comprising
fixing a base support element (101) of a turbine support device (100) to a ground,
coupling a support bar (110) of the turbine support device (100) to the base support element (101),
coupling a coupling region (113) of the support bar (110) to a turbine casing (221, 222) of the turbine,
wherein the coupling region (113) is spaced apart from the base support element (101),
wherein the support bar (110) comprises a cross section profile which comprises a first length along a first principal direction (111) and a second length along a second principal direction (112) which is orthogonal to the first principal direction (111),
wherein the first length is longer than the second length such that the support bar (110) is stiffer against a force acting in the first principal direction (111) than against a force acting in the second principal direction (112).
